# EUROPEAN PATENT SPECIFICATION

(11) **EP 4 271 022 B1**
(45) Date of publication and mention of the grant of the patent: **19.11.2025**
(21) Application number: 21927813.2
(22) Date of filing: 25.02.2021
(51) Int. Cl.: H04W 4/44, H04W 4/46, H04W 40/12, H04W 40/18, H04W 40/20, H04W 40/22, H04W 76/14, H04W 88/04, H04W 84/22

(54) **COMMUNICATION DEVICE, CONTROL METHOD, AND PROGRAM**
KOMMUNIKATIONSVORRICHTUNG, STEUERUNGSVERFAHREN UND PROGRAMM
DISPOSITIF DE COMMUNICATION, PROCÉDÉ DE COMMANDE ET PROGRAMME

(43) Date of publication of application: 01.11.2023
(73) Proprietor: HONDA MOTOR CO., LTD., Tokyo 105-8404 (JP)
(72) Inventor: IMAI, Naoko, Tokyo 107-8556 (JP); OI, Yusuke, Tokyo 107-8556 (JP); TAKAHATA, Masahiro, Tokyo 107-8556 (JP); SHIBAUCHI, Tsubasa, Tokyo 107-8556 (JP)
(74) Representative: Weickmann & Weickmann PartmbB
(86) International application number: PCT/JP2021/006979
(87) International publication number: WO 2022/180711

(56) References cited:
- WO-A1-2013/054722
- JP-A- 2007 096 917
- JP-A- 2007 096 917
- JP-A- 2009 212 753
- JP-A- 2013 197 887
- JP-A- 2016 134 755
- US-A1- 2011 012 756
- US-A1- 2016 212 787
- US-A1- 2017 245 132
- US-A1- 2018 368 048
- US-A1- 2020 021 941

## Description

### TECHNICAL FIELD

The present invention relates to a communication device, a control method, and a program, and more particularly, to a technique for selecting a relay device in relay transmission.

### BACKGROUND ART

Vehicle-to-Everything (V2X) communication, by which a vehicle communicates wirelessly with another vehicle or an object, enables the vehicle to acquire various types of information or to provide information to others. When a vehicle transmits data to a device such as a server on the Internet or a network that has been constructed by a service provider, the vehicle has to connect to a predetermined communication device such as, for example, a base station or an access point through which the vehicle is capable of connecting to the network. However, vehicles are not always in an environment where the connection to such a predetermined communication device is possible. For this reason, it is envisioned that a vehicle will communicate with a predetermined communication device through, for example, another vehicle capable of connecting to such a predetermined communication device. Japanese patent laid-open no. 2017-184051 describes a configuration for connection between vehicles to transfer data to a predetermined node. In Japanese patent laid-open no. 2017-184051, a vehicle close to the predetermined node is identified by communication between the vehicles, and data is transferred to the vehicle close to the predetermined node.

Further, US 2016/212787 A1 discloses a communication device that communicates wirelessly and is configured to receive a signal from another device, determine a transmission timing of a response to the signal, and transmit the response to the signal to the other device. Additionally, it is referred to US 2018/368048 A1.

### SUMMARY OF INVENTION

### TECHNICAL PROBLEM

It is expected that when a communication device establishes a connection with another device to communicate with the predetermined device, it will not be possible for the communication device to recognize whether the other device is capable of connecting to the predetermined device, and at what communication rate (throughput) the other device is capable of connecting, when the other device is capable of connecting to the predetermined device. For example, also in the technique of Japanese patent laid-open no. 2017-184051, the vehicle close in distance to a predetermined node is not always capable of communicating with the predetermined node. In this case, the communication device may have to change a connection destination of the other device after the communication device is connected to another device, because it may be that the other device is not capable of connecting to the predetermined device, or the communication rate between the other device and the predetermined device is insufficient, and consequently it may not possible for the communication device to communicate with the predetermined device at a sufficient communication rate.

The present invention provides a technique that enables a communication device to appropriately select another device to relay communication with a predetermined device.

### SOLUTION TO PROBLEM

The invention is set out in the independent claims.

A first aspect of the present invention comprises a communication device according to claim 1

A second aspect of the invention comprises a control method as set forth in claim 16. A third aspect of the invention comprises a program as set forth in claim 17.

Some preferred embodiments are defined by the dependent claims.

### ADVANTAGEOUS EFFECTS OF INVENTION

According to the present invention, it becomes possible for a communication device to appropriately select another device to relay communication with a predetermined device.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a system configuration example.
FIG. 2 is a diagram illustrating a hardware configuration example of a device that can execute a relay.
FIG. 3 is a diagram illustrating a functional configuration example of the device that can execute the relay.
FIG. 4 is a diagram illustrating an example of a flow of processing performed by a device that can execute the relay.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (System Configuration)

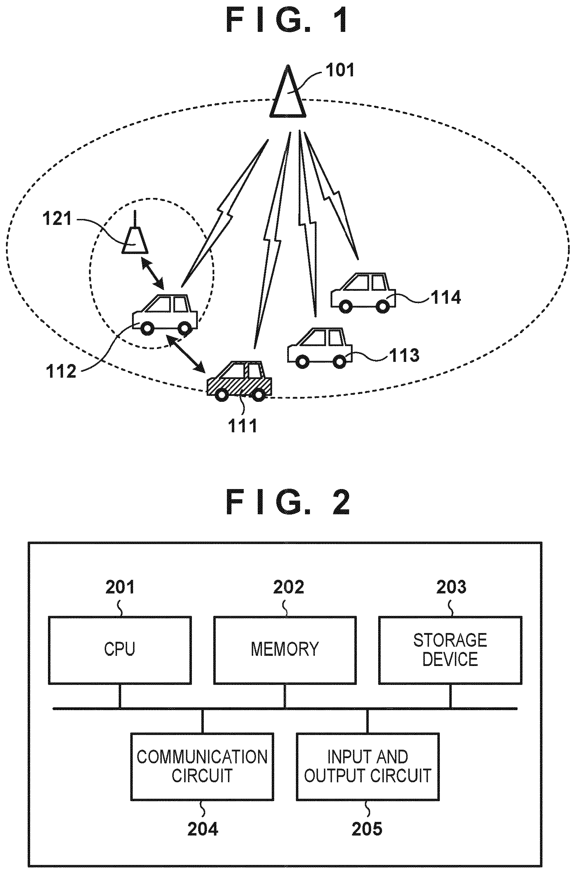

FIG. 1 illustrates a configuration example of a system in the present embodiment. The present system is a wireless communication system in which vehicles 111 to 114, which are capable of performing wireless communication, connect to a predetermined network such as the Internet, and perform communication. The vehicles 111 to 114 according to the present embodiment connect to a base station 101 of a cellular communication system, for example, and perform communication with a predetermined communication device. In addition, the vehicles 111 to 114 are, for example, configured to be capable of communicating with each other by connecting to each other using a communication method different from the cellular communication method for communicating with the base station 101. Here, the communication method different from the cellular communication method is, for example, any communication method of cellular Vehicle-to-Everything (V2X), wireless LAN, Dedicated Short Range Communications (DSRC), and Bluetooth (registered trademark). Note that although the cellular V2X is one aspect of the cellular communication method, it is not used for the communication between the base station and the terminal (that is, the vehicle 111 to the vehicle 114), but is used for the communication between a device other than the base station and the terminal (the vehicle 111 to the vehicle 114). Therefore, these communication methods are treated as different communication methods throughout the present embodiment and the scope of claims. Note that a combination of the cellular communication method and any other communication method is an example, and the vehicles 111 to 114 are configured to connect to a first device such as the base station 101 in a first communication method, and to be connectable with each other in a second communication method different from the first communication method. Note that in FIG. 1, only one base station 101 and four vehicles 111 to 114 are illustrated, but it is needless to say that a large number of these devices can be present.

By using the second communication method, the vehicles 111 to 114 are capable of performing, for example, not only vehicle-to-vehicle communication but also communication with another device such as, for example, an access point of a wireless LAN. In one example, it is assumed that the vehicle 112 is present in a location where it is possible to communicate with another device 121 that is fixed in a communication method other than the cellular communication method. In addition, the vehicle 113 and the vehicle 114 are also capable of connecting to and communicating with surrounding devices depending on their locations. Note that FIG. 1 illustrates an example in which the vehicle 112 is capable of directly connecting to another device 121 that is fixed. However, without being limited to this, for example, the vehicle 112 may be further capable of communicating with another device 121 that is fixed, through a wireless communication device of another vehicle or the like. The same applies to other vehicles.

By performing cellular communication with the base station 101, the vehicles 111 to 114 are capable of transmitting, for example, information that has been acquired by sensors of the respective vehicles to a device such as a predetermined information processing server. The information processing server is capable of performing various types of processing such as control for automated driving with this information. In addition, by performing the cellular communication with the base station 101, the vehicles 111 to 114 are capable of acquiring various types of information such as driving control information and service information in accordance with the locations of the vehicles from a server that holds, for example, predetermined information. On the other hand, in an environment in which a large number of vehicles communicate in parallel, the communication capacity that can be provided by the base station 101 may be insufficient. For this reason, in the present embodiment, for example, the communication of the vehicle 111 is offloaded onto another device through the other vehicles 112 to 114. Note that the communication of the vehicle 112 to the vehicle 114 can be similarly offloaded through another vehicle. However, here, a description will be given by focusing on offloading the communication of the vehicle 111.

The vehicle 111 establishes a connection with a vehicle in the surroundings, and communicates with a predetermined device such as a server on the Internet through the connection. For this purpose, the vehicle 111 transmits a connection request for requesting another vehicle in the surroundings to relay the communication, and establishes a connection. At this time, the vehicle 111 can, for example, establish a connection with another vehicle having good wireless quality of communication with the vehicle 111 in the second communication system. However, in some cases, the other vehicle cannot communicate with the predetermined device that is a communication partner with sufficient quality. In this case, the vehicle 111 attempts communication with the predetermined device through the other vehicle. After recognizing that the communication rate is insufficient, the vehicle 111 disconnects the connection with the other vehicle, and attempts a connection with further another vehicle. As a result, it is not possible for the vehicle 111 to communicate with the predetermined device in a timely manner.

Therefore, in the present embodiment, a mechanism is provided for the vehicle 111 to recognize beforehand which one of the vehicle 112 to the vehicle 114 to be candidates for a relay device is suitable for communicating with the predetermined device. Specifically, the vehicle 111 transmits a predetermined signal, before the connection with another device such as the vehicle 112 to the vehicle 114 is established. Such a predetermined signal is a signal for transmitting a response signal to the vehicle 111, in response to receipt of the predetermined signal by the vehicle 112 to the vehicle 114. In one example, it can be a signal for requesting, by the vehicle 111, a connection for relaying the communication with the predetermined device, such as, for example, a specific server. The predetermined device here can be, for example, a device deployed on the Internet, and the predetermined signal can be a signal for requesting a wireless connection to be relayed to a device connectable to the Internet. Note that the predetermined signal can be a signal (that is, a multicast signal or a broadcast signal) simultaneously transmitted to the plurality of vehicles 112 to 114. Upon receiving this predetermined signal, the vehicle 112 to the vehicle 114 control a transmission timing of a response signal to the predetermined signal, based on communication executable by the self-device with the predetermined device that is a communication partner of the vehicle 111. The transmission timing here is set to make the time from a reception timing of the predetermined signal shorter the better the condition under which relay of the communication of the vehicle 111 executable.

For example, the vehicle 112 to the vehicle 114 determine whether the communication quality obtainable by the self-device in communicating with the predetermined device can satisfy a requested quality to be requested by the vehicle 111 in communicating with the predetermined device. For example, the quality can be throughput or a communication capacity. The vehicle 112 to the vehicle 114 can estimate the communication quality in the communication between the self-device and the predetermined device, based on, for example, the wireless quality with a partner device (for example, an access point of a wireless LAN) capable of communicating with the predetermined device. The wireless quality can be, for example, signal to noise ratio (SNR), signal to interference plus noise ratio (SINR), or received signal strength indicator (RSSI). In one example, the obtainable communication capacity or throughput can be calculated, based on the wireless quality and available frequency bandwidth. Then, in a case where a communication quality that satisfies the requested quality is obtained, the vehicle 112 to the vehicle 114 make a transmission timing of the response earlier than that of a case where a communication quality that satisfies the requested quality is not obtained. Note that the transmission timing of the response may be determined in accordance with a ratio between the requested quality and the obtainable communication quality so that the response is transmitted earlier, as the communication quality more similar to the requested quality is obtainable. According to this, the vehicle 111 is capable of determining that there is a higher probability that the requested quality can be satisfied, as a period from the transmission of the predetermined signal to the reception of a response is shorter in length. As a result, by selecting and connecting to another vehicle having an early reception timing of the response, the vehicle 111 is capable of establishing a connection with the other vehicle capable of relaying the communication with the predetermined device with high quality.

In addition, the vehicle 112 to the vehicle 114 may control to make the transmission timing of the response earlier, as there is a higher probability that the relay by the self-device will enable the vehicle 111 to communicate with the predetermined device. For example, the vehicle 112 to the vehicle 114 can estimate the probability that the relay by the self-device will enable the communication with the predetermined device, based on, for example, a first wireless quality between the self-device and a partner device (for example, an access point of a wireless LAN) capable of communicating with the predetermined device and a second wireless quality between the self-device and the vehicle 111. The vehicle 112 to the vehicle 114 can determine that the probability is higher, as the value of SNR, SINR, RSSI, or the like is higher. The vehicle 112 to the vehicle 114 can determine that this probability is low, in a case where any of these wireless qualities is low. That is, in a case where both the first wireless quality and the second wireless quality are sufficiently high, the vehicle 112 to the vehicle 114 can determine that there is a high probability that the relay by the self-device will enable the vehicle 111 to communicate with the predetermined device. Note that the vehicle 112 to the vehicle 114 may determine this probability, based on only one of the first wireless quality and the second wireless quality. For example, in a case where the vehicle 112 to the vehicle 114 are capable of receiving the predetermined signal and in a case where it can be estimated that there is a sufficient wireless quality between the vehicle 111 and the vehicle 112 to the vehicle 114, the vehicle 112 to the vehicle 114 are capable of determining the probability in consideration of only the above-described first wireless quality. In addition, in a case where the self-device is present in a location where it is known beforehand that, for example, the first wireless quality becomes sufficiently high, the vehicle 112 to the vehicle 114 may determine the probability in consideration of only the second wireless quality. Note that without calculating the above probability from the values of the wireless qualities such as SNR, SINR, and RSSI, the vehicle 112 to the vehicle 114 may control to make the transmission timing of the response earlier, as a value of such a wireless quality is better.

Further, for example, the vehicle 112 to the vehicle 114 may determine that there is a lower probability that the relay by the self-device will enable the vehicle 111 to communicate with the predetermined device, as a communication path to the predetermined device (the number of hops or the like in a wireless section) is longer in length. Note that without determining the probability from the length of the communication path, the vehicle 112 to the vehicle 114 may make the transmission timing of the response earlier, as the communication path is shorter. In addition, the vehicle 112 to the vehicle 114 may determine that there is a lower probability that the relay by the self-device will enable the vehicle 111 to communicate with the predetermined device, as the moving speed of the self-device, the moving speed of the vehicle 111, or the relative moving speed between the self-device and the vehicle 111 is faster. Note that without determining the probability that the relay by the self-device will enable the vehicle 111 to communicate with the predetermined device from any of the above-described moving speeds, the vehicle 112 to the vehicle 114 may delay the transmission timing of the response, as the moving speed is faster.

Further, the vehicle 112 to the vehicle 114 may determine that there is a higher probability that the relay by the self-device will enable the vehicle 111 to communicate with the predetermined device, as there is a higher probability of moving to a location where it is possible to communicate with a device capable of communicating with the predetermined device (for example, there is a higher possibility of entering a communicable area of such a device, based on an expected movement route corresponding to a destination that has been set). Note that from a first probability of moving to the location where it is possible to communicate a device capable of communicating with the predetermined device, without identifying a second probability that the relay by the self-device will enable the vehicle 111 to communicate with the predetermined device, the vehicle 112 to the vehicle 114 may make the transmission timing of the response earlier, as the first probability is higher. In addition, the vehicle 112 to the vehicle 114 can make the transmission timing of the response earlier, as the time while it is possible to maintain the connection with the device capable of communicating with the predetermined device is longer. In one example, on the expected movement route of the self-device, the vehicle 112 to the vehicle 114 can estimate a time to stay within a communicable range of the device capable of communicating with the predetermined device, and can identify such a time as the time while it is possible to maintain the connection. Note that the vehicle 112 to the vehicle 114 may determine a probability that it becomes possible to communicate with the device capable of communicating with the predetermined device, based on the movement route or the like of the self-device, and may control to make the transmission timing of the response earlier, as the probability is higher. In addition, in a case of actually establishing a connection with the device capable of communicating with the predetermined device, the vehicle 112 to the vehicle 114 may transmit the response earlier than a case where the connection with the device has not been established yet.

According to the foregoing, the vehicle 111 is capable of determining that there is a higher probability that the relay by the vehicle 112 to the vehicle 114 will enable the vehicle 111 to communicate with the predetermined device, as the period from the transmission of the predetermined signal to the reception of the response is shorter in length. As a result, by selecting and connecting to another vehicle having an early reception timing of the response, the vehicle 111 is capable of establishing a connection with another vehicle having a high probability of enabling the communication with the predetermined device.

In addition, the vehicle 112 to the vehicle 114 may control to make the transmission timing of the response earlier, as there is a larger communication capacity available for relaying the communication between the vehicle 111 and the predetermined device. For example, from a first communication capacity achievable between the self-device and a partner device capable of communicating with the predetermined device, the vehicle 112 to the vehicle 114 can identify a second communication capacity used for communication of the self-device, and can identify a value obtained by subtracting the second communication capacity from the first communication capacity, as a communication capacity available for relaying the communication between the vehicle 111 and the predetermined device. Note that, for example, the vehicle 112 to the vehicle 114 may receive the communication capacity requested by the vehicle 111 in a predetermined signal, and may control to transmit a response earlier, as the communication capacity similar to the requested communication capacity is more achievable in accordance with a ratio between the available communication capacity and the requested communication capacity.

Hereinafter, configurations and operations of the vehicle 112 to the vehicle 114, which perform such processing, will be described. Note that in the present embodiment, in order to select a device to relay the communication of the vehicle 111, the description is given with regard to processing to be performed by the vehicle 112 to the vehicle 114. However, the vehicle is merely one aspect, and the discussion according to the present embodiment is applicable to a wireless communication device in any aspect.

### (Device Configuration)

FIG. 2 illustrates a hardware configuration example of the vehicle 112 to the vehicle 114 in the present embodiment. The vehicle 112 to the vehicle 114 each include a general-purpose computer in one example, and the computer includes, for example, a CPU 201, a memory 202, a storage device 203, a communication circuit 204, and an input and output circuit 205. Note that FIG. 2 illustrates a configuration example of hardware according to the present embodiment, and illustrations of the other configurations such as configurations of the vehicle 112 to the vehicle 114 as vehicles are omitted. The CPU 201 executes, for example, a program stored in the memory 202 to perform processing to be described later and conduct control of the entire device. Note that the CPU 201 can be substituted by any one or more processors such as an MPU and an ASIC. The memory 202 holds a program for causing the vehicle 112 to the vehicle 114 to perform various types of processing, and also functions as a work memory when the program is executed. In one example, the memory 202 is a random access memory (RAM) or a read-only memory (ROM). The storage device 203 is, for example, a detachable external storage device, a built-in hard disk drive, or the like, and holds various types of information. The communication circuit 204 performs signal processing related to communication, acquires various types of information from an external device through a communication network, and transmits the various types of information to the external device. Note that the information that has been acquired by the communication circuit 204 can be stored in, for example, the memory 202 or the storage device 203. Note that the vehicle 112 to the vehicle 114 each may include a plurality of communication circuits 204. The input and output circuit 205 controls, for example, outputs of screen information to be displayed on a display device, not illustrated, audio information to be output from a speaker, and receiving of user inputs via a keyboard, a pointing device, or the like. Note that the input and output circuit 205 may control a device that integrally inputs into and outputs from a touch panel or the like. Note that the configuration of FIG. 2 is an example, and for example, the vehicle 112 to the vehicle 114 each may include dedicated hardware for performing the above-described processing.

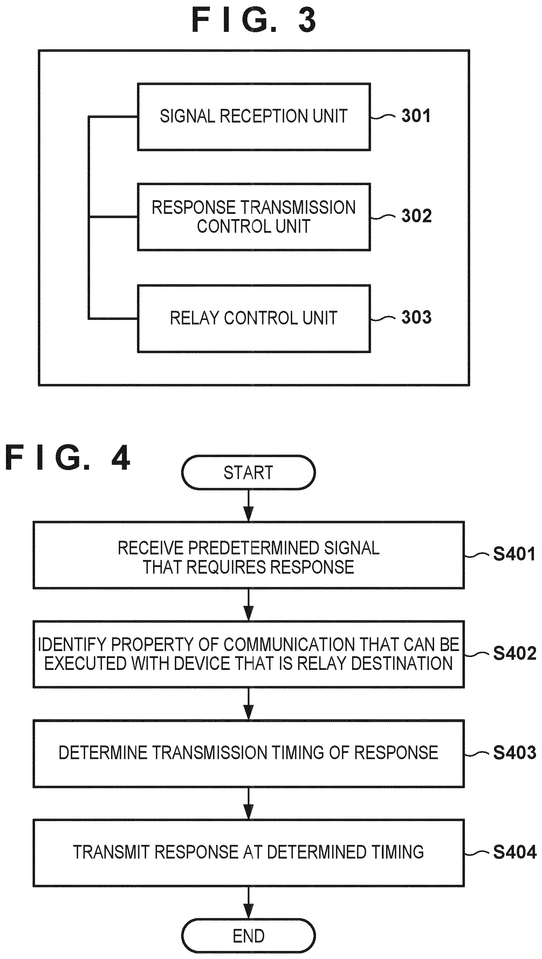

FIG. 3 illustrates a functional configuration example of the vehicle 112 to the vehicle 114 in the present embodiment. The vehicle 111 to the vehicle 114 each include, for example, a signal reception unit 301, a response transmission control unit 302, and a relay control unit 303, as its functions. Note that these functional units may be implemented, for example, by the CPU 201 executing a program stored in the memory 202 or the storage device 203, or may be implemented by dedicated hardware.

The signal reception unit 301 receives a predetermined signal from another communication device such as the vehicle 111, which requests the vehicle 112 to the vehicle 114 to relay the communication. As described above, the predetermined signal is a signal requested to transmit a response, when the vehicle 112 to the vehicle 114 receive the predetermined signal. The predetermined signal can be, for example, a signal for requesting (asking for) the relay of the communication in order to perform the communication with a predetermined device on a network. Note that this is merely an example, and the predetermined signal can be any signal that requests a response, such as, for example, a search request or an authentication request. Upon receiving the predetermined signal, the response transmission control unit 302 conducts control in transmitting the response to a device (for example, the vehicle 111), which is a transmission source. The response transmission control unit 302 determines a transmission timing of the response, based on communication executable by the self-device with the predetermined device that is a communication partner of the device (for example, the vehicle 111), which is the transmission source of the predetermined signal. Since the method for determining the transmission timing has been described above, its description is not repeated here. The response transmission control unit 302 transmits the response to the predetermined signal at the timing that has been determined.

The relay control unit 303 establishes a connection with a first another device (for example, the vehicle 111) that is the transmission source of the predetermined signal, based on the response that has been transmitted under the control of the response transmission control unit 302. In parallel, the relay control unit 303 establishes a connection with a second another device (for example, an access point of a wireless LAN) connectable to the predetermined device that is the communication partner of the first another device. Then, the relay control unit 303 relays the communication between the first another device and the second another device. That is, the relay control unit 303 conducts control of transferring a signal that has been received from the first another device to the second another device and transferring a signal that has been received from the second another device to the first another device. Note that the relay control unit 303 can perform communication under the control of the base station 101, for example, in a case where the communication with the first another device is performed by using cellular side link communication. In addition, in a case where the communication is performed with the first another device in accordance with wireless LAN standards, and in a case where the self-device functions as an access point, the relay control unit 303 can control the communication of the first another device under the control of the self-device. In addition, in the case where the communication is performed with the first another device in accordance with the wireless LAN standards, and in a case where the self-device functions as a station, the relay control unit 303 can perform the communication under the control of the first another device. In this manner, the relay control unit 303 may perform communication with the first another device under the control of the self-device or under the control of another device (for example, the first another device or any other device). Similarly, the relay control unit 303 can perform the communication with the second another device under the control of the self-device or under the control of another device (for example, the second another device or any other device).

### (Flow of Processing)

Next, an example of a flow of processing performed by the vehicle 112 to the vehicle 114 will be described. Note that details of each process to be described later have been described above. Therefore, in the description here, only the flow of the processing is outlined, and the detailed description is not repeated. The present processing is implemented by, for example, the CPU 201 executing a program stored in the memory 202 or the storage device 203.

In the present processing, the vehicle 112 to the vehicle 114 first receive a predetermined signal that requests a response, from the first another device (for example, the vehicle 111), which is present in the surroundings, and which requests relay of communication by the self-device (S401). Then, the vehicle 112 to the vehicle 114 identify a property of the communication executable between the self-device and the second another device (for example, a device capable of communicating with the predetermined device that is a communication partner of the first another device) that is a relay destination to which the communication of the first another device is to be relayed (S402). Note that regarding the predetermined device here, the communication partner device of the first another device may be the second another device, or may be a device that is deployed on a predetermined network such as the Internet and that further needs relay by the second another device in order to perform communication. In addition, the property of the communication here can be indicated by, for example, information capable of identifying whether the communication between the first another device and the predetermined device can be performed on a good condition. Then, the vehicle 112 to the vehicle 114 determine a transmission timing of a response to the predetermined signal received in S401, based on the property of the communication that can be executed with the second another device (S403). The vehicle 112 to the vehicle 114 determine transmission of the response to the first another device at a timing of a shorter period from the reception of the predetermined signal, as better relay communication is available. Then, at the timing determined in S403, the vehicle 112 to the vehicle 114 transmit the response to the first another device (S404).

The first another device is capable of determining whether the device (the vehicle 112 to the vehicle 114), which is a transmission source of the response, is a device suitable for relaying the communication between the first another device and the second another device in accordance with a timing when receiving this response. In one example, the vehicle 111, for example, transmits predetermined signals to the vehicle 112 to the vehicle 114, and receives responses respectively from the vehicle 112 to the vehicle 114. Here, in a case where the vehicle 111 receives the response from the vehicle 112 earliest, the vehicle 111 is capable of recognizing that by connecting to the vehicle 112, it is possible to perform communication with the device that is the relay destination on a good condition. Therefore, the vehicle 111 can establish a connection with the vehicle 112 and request the vehicle 112 to relay the communication with, for example, the device 121. Note that, for example, the vehicle 111 may notify the base station 101 of reception timings of responses from the vehicle 112 to the vehicle 114, and may cause the base station 101 to select another vehicle to be connected to.

In this manner, in a procedure according to the present embodiment, the vehicle 112 to the vehicle 114 are capable of notifying the vehicle 111 that whether it is possible to relay the communication between the vehicle 111 and the predetermined device that is a communication partner of the vehicle 111 on a good condition, by the transmission timing of the response to the predetermined signal. Accordingly, the vehicle 111 is capable of selecting a vehicle suitable for relay transmission from among other vehicles (the vehicle 112 to the vehicle 114) to be candidates for the relay device, establishing a connection, and requesting the relay. In addition, since information is notified by the transmission timing of the response, it is not necessary to add information to be included in the response. Therefore, selection of an appropriate relay device is enabled with no degradation in use efficiency of frequency.

<Examples useful for understanding the invention as defined by the claims.> A communication apparatus according to the above embodiments is: a communication device that communicates wirelessly, and is configured to: receive, from a first another device, a predetermined signal to be transmitted before a connection with the first another device is established, determine, upon receiving the predetermined signal, a transmission timing of a response to the predetermined signal, based on a condition of communication that is executable between the communication device and a second another device that is a communication partner of the first another device and on a moving speed of the communication device; and transmit, to the first another device, the response to the predetermined signal at the determined transmission timing, wherein the transmission timing is determined to be made earlier the better the condition under which the communication device is capable of relaying a communication between the first another device and the second another device, wherein the transmission timing is determined to be made earlier, as the moving speed of the communication device is lower.

According to this embodiment, the first another device that has transmitted the predetermined signal and received the response is capable of identifying communication executable by each communication device in the relay with the second another device, and it becomes possible to select an appropriate communication device as a relay device.

Furthermore, according to this embodiment, the first another device is capable of identifying the moving speed of the communication device, based on the reception timing of the response, and for example, it becomes possible to select a communication device having a slow moving speed and capable of stably enabling the relay, and to request the relay.

The predetermined signal may be a signal for requesting, by the first another device, a connection for relaying the communication with the second another device.

According to this embodiment, when the first another device requests a connection, it becomes possible to identify the communication executable by each communication device with the second another device by the response, and to smoothly shifting to connection processing.

The signal for requesting the connection may be a signal simultaneously transmitted from the first another device to a plurality of devices.

According to this embodiment, the first another device is capable of receiving the response from a plurality of devices present in the surroundings at timings in accordance with the respective communication situations of the plurality of devices, determining a communication device suitable for the relay device early, and starting communication early.

The communication device may control such that the transmission timing, in a case where a requested quality when the first another device communicates with the second another device is satisfiable with a communication quality obtainable by the communication device through communication with the second another device, is earlier than the transmission timing in a case where the requested quality is unsatisfiable with the communication quality.

According to this embodiment, the first another device is capable of identifying the quality of the communication between the communication device and the second another device in accordance with the reception timing of the response, and by selecting a communication device with an earlier reception timing of the response as the relay device, it becomes possible to increase the probability that the requested quality can be satisfied in the relay communication.

The communication device may control to make the transmission timing earlier, as there is a higher probability that the first another device is capable of communicating with the second another device through relay of the communication device.

According to this embodiment, the first another device is capable of identifying a communication device with a high probability of enabling the communication between the self-device and the second another device, and by requesting such a communication device to relay the communication, it becomes possible to reduce the probability of connecting to a communication device that is not capable of communicating with the second another device.

The communication device may control to make the transmission timing earlier, as there is a larger communication capacity available to the communication for the first another device in the communication between the communication device and the second another device.

According to this embodiment, the first another device is capable of identifying a communication device that is capable of using the communication capacity for the relay of the self-device, and for example, it is possible to prevent from requesting a communication device that is not capable of using the communication capacity sufficiently to relay the communication.

The communication device may control to make the transmission timing earlier, as wireless quality in the communication with the second another device is better.

According to this embodiment, the first another device is capable of identifying a device capable of relaying the communication with the second another device with good wireless quality, and for example, it is possible to prevent from requesting a communication device having insufficient wireless quality with the second another device to relay the communication.

The wireless quality may include at least one of received signal strength, a signal-to-noise ratio, and a signal-to-interference and noise ratio of a signal that have been received in the communication device regarding the communication with the second another device.

According to this embodiment, the first another device is capable of identifying a situation of the wireless section between the communication device and the second another device in accordance with the reception timing of the response, and it becomes possible to select a communication device suitable for the relay.

The communication device may control to make the transmission timing earlier, as there is a higher probability that the communication device is capable of communicating with the second another device.

According to this embodiment, the first another device is capable of identifying the probability that each communication device is capable of communicating with the second another device, based on the reception timing of the response, and for example, it is possible to prevent from requesting a communication device having a low probability of being capable of communicating with the second another device to relay the communication.

The communication device may control such that the transmission timing in a case where the communication device is in connection with the second another device is earlier than the transmission timing in a case where the communication device is not in connection with the second another device.

According to this embodiment, the first another device is capable of identifying a communication device that is currently establishing a connection with the second another device, and, for example, by requesting such a communication device to relay the communication, it becomes possible to reliably communicate with a communication partner.

The communication device may determine that there is a higher probability of being capable of communicating with the second another device, as there is a higher probability of moving to a location where the communication with the second another device is possible on a movement route of the communication device.

According to this embodiment, in a case where the movement route of the communication device has been decided, for example, the probability of being capable of connecting to the second another device can be identified with high accuracy, based on a geographical range in which it becomes possible to communicate with the second another device along the movement route, and the transmission timing of the response can be appropriately set, accordingly.

The communication device may control to make the transmission timing earlier, as a time while the communication device is capable of maintaining a connection with the second another device is longer.

According to this embodiment, the first another device is capable of identifying a communication device capable of maintaining the connection with the second another device for a long time, based on the reception timing of the response to the predetermined signal, and for example, it becomes possible to request an appropriate communication device suitable for the duration of the communication to be performed by the self-device to relay the communication.

The communication device may be a vehicle.

According to this embodiment, the first another device is capable of selecting a vehicle suitable for the relay from among vehicles capable of relaying the communication, based on the reception timing of the response to the predetermined signal.

The first another device may be a vehicle.

According to this embodiment, it becomes possible for the first another device to find a communication device capable of relaying the communication of the self-device, for example, while traveling, and to select a device capable of appropriately relaying the communication.

The communication with the second another device may be performed through a wireless LAN.

According to this embodiment, inexpensive and high-speed communication is enabled.

A control method according to the above embodiments is: a control method performed by a communication device that communicates wirelessly, the control method comprising: receiving, from a first another device, a predetermined signal to be transmitted before a connection with the first another device is established, and determining, upon receiving the predetermined signal, a transmission timing of a response to the predetermined signal, based on a condition of communication that is executable between the communication device and a second another device that is a communication partner of the first another device and on a moving speed of the communication device; and transmitting, to the first another device, the response to the predetermined signal at the determined transmission timing, wherein the transmission timing is determined to be made earlier the better the condition under which the communication device is capable of relaying a communication between the first another device and the second another device, wherein the transmission timing is determined to be made earlier, as the moving speed of the communication device is lower.

According to this embodiment, the first another device that has transmitted the predetermined signal and received the response is capable of identifying communication executable by each communication device in the relay with the second another device, and it becomes possible to select an appropriate communication device as a relay device.

A program according to the above embodiments is: a program which, when executed by a computer included in a communication device that communicates wirelessly, causes the communication device to: receive, from a first another device, a predetermined signal to be transmitted before a connection with the first another device is established, determine, upon receiving the predetermined signal, a transmission timing of a response to the predetermined signal, based on a condition of communication that is executable between the communication device and a second another device that is a communication partner of the first another device and on a moving speed of the communication device; and transmit, to the first another device, the response to the predetermined signal at the determined transmission timing, wherein the transmission timing is determined to be made earlier the better the condition under which the communication device is capable of relaying a communication between the first another device and the second another device, wherein the transmission timing is determined to be made earlier, as the moving speed of the communication device is lower.

According to this embodiment, the first another device that has transmitted the predetermined signal and received the response is capable of identifying communication executable by each communication device in the relay with the second another device, and it becomes possible to select an appropriate communication device as a relay device.

## Claims

1. A communication device configured to communicate wirelessly, the communication device configured to:
receive, from a first another device, a predetermined signal to be transmitted before a connection with the first another device is established;
determine, upon receiving the predetermined signal, a transmission timing of a response to the predetermined signal, based on a condition of communication that is executable between the communication device and a second another device that is a communication partner of the first another device and on a moving speed of the communication device; and
transmit, to the first another device, the response to the predetermined signal at the determined transmission timing,
wherein the transmission timing is determined to be made earlier the better the condition under which the communication device is capable of relaying a communication between the first another device and the second another device,
wherein the transmission timing is determined to be made earlier, as the moving speed of the communication device is lower.

2. The communication device according to claim 1, wherein the predetermined signal is a signal for requesting, by the first another device, a connection for relaying the communication with the second another device.

3. The communication device according to claim 2, wherein the signal for requesting the connection is a signal simultaneously transmitted from the first another device to a plurality of devices.

4. The communication device according to any one of claims 1 to 3, wherein the communication device controls such that the transmission timing, in a case where a requested quality when the first another device communicates with the second another device is satisfiable with a communication quality obtainable by the communication device through communication with the second another device, is earlier than the transmission timing in a case where the requested quality is unsatisfiable with the communication quality.

5. The communication device according to any one of claims 1 to 4, wherein the communication device controls to make the transmission timing earlier, as there is a higher probability that the first another device is capable of communicating with the second another device through relay of the communication device.

6. The communication device according to any one of claims 1 to 5, wherein the communication device controls to make the transmission timing earlier, as there is a larger communication capacity available to the communication for the first another device in the communication between the communication device and the second another device.

7. The communication device according to any one of claims 1 to 6, wherein the communication device controls to make the transmission timing earlier, as wireless quality in the communication with the second another device is better.

8. The communication device according to claim 7, wherein the wireless quality includes at least one of received signal strength, a signal-to-noise ratio, and a signal-to-interference and noise ratio of a signal that have been received in the communication device regarding the communication with the second another device.

9. The communication device according to any one of claims 1 to 8, wherein the communication device controls to make the transmission timing earlier, as there is a higher probability that the communication device is capable of communicating with the second another device.

10. The communication device according to claim 9, wherein the communication device controls such that the transmission timing in a case where the communication device is in connection with the second another device is earlier than the transmission timing in a case where the communication device is not in connection with the second another device.

11. The communication device according to claim 9, wherein the communication device determines that there is a higher probability of being capable of communicating with the second another device, as there is a higher probability of moving to a location where the communication with the second another device is possible on a movement route of the communication device.

12. The communication device according to any one of claims 1 to 11, wherein the communication device controls to make the transmission timing earlier, as a time while the communication device is capable of maintaining a connection with the second another device is longer.

13. The communication device according to any one of claims 1 to 12, wherein the communication device is a vehicle.

14. The communication device according to any one of claims 1 to 13, wherein the first another device is a vehicle.

15. The communication device according to any one of claims 1 to 14, wherein the communication with the second another device is performed through a wireless LAN.

16. A control method performed by a communication device that communicates wirelessly, the control method comprising:
receiving (S401), from a first another device, a predetermined signal to be transmitted before a connection with the first another device is established; and
determining (S403), upon receiving the predetermined signal, a transmission timing of a response to the predetermined signal, based on a condition of communication that is executable between the communication device and a second another device that is a communication partner of the first another device and on a moving speed of the communication device; and
transmitting (S404), to the first another device, the response to the predetermined signal at the determined transmission timing,
wherein the transmission timing is determined to be made earlier the better the condition under which the communication device is capable of relaying a communication between the first another device and the second another device,
wherein the transmission timing is determined to be made earlier, as the moving speed of the communication device is lower.

17. A program which, when executed by a computer included in a communication device that communicates wirelessly, causes the communication device to:
receive, from a first another device, a predetermined signal to be transmitted before a connection with the first another device is established;
determine, upon receiving the predetermined signal, a transmission timing of a response to the predetermined signal, based on a condition of communication that is executable between the communication device and a second another device that is a communication partner of the first another device and on a moving speed of the communication device; and
transmit, to the first another device, the response to the predetermined signal at the determined transmission timing,
wherein the transmission timing is determined to be made earlier the better the condition under which the communication device is capable of relaying a communication between the first another device and the second another device,
wherein the transmission timing is determined to be made earlier, as the moving speed of the communication device is lower.

## Patentansprüche

1. Kommunikationsvorrichtung, welche dazu eingerichtet ist, drahtlos zu kommunizieren, wobei die Kommunikationsvorrichtung eingerichtet ist, zum:
Empfangen, von einer ersten anderen Vorrichtung, eines vorbestimmten Signals, welches zu übertragen ist, bevor eine Verbindung mit der ersten anderen Vorrichtung hergestellt ist,
Bestimmen, auf ein Empfangen des vorbestimmten Signals hin, eines Übertragungszeitpunkts für eine Antwort auf das vorbestimmte Signal, auf Grundlage eines Kommunikationszustands, welcher zwischen der Kommunikationsvorrichtung und einer zweiten anderen Vorrichtung, welche ein Kommunikationspartner der ersten anderen Vorrichtung ist, ausführbar ist, und auf einer Bewegungsgeschwindigkeit der Kommunikationsvorrichtung; und
Übertragen, zu der ersten anderen Vorrichtung, der Antwort auf das vorbestimmte Signal zu dem bestimmten Übertragungszeitpunkt,
wobei der Übertragungszeitpunkt umso früher bestimmt wird, je besser der Zustand ist, unter welchem die Kommunikationsvorrichtung in der Lage ist, eine Kommunikation zwischen der ersten anderen Vorrichtung und der zweiten anderen Vorrichtung weiterzuleiten,
wobei der Übertragungszeitpunkt bestimmt wird, um früher festgelegt zu sein, wenn die Bewegungsgeschwindigkeit der Kommunikationsvorrichtung niedriger ist.

2. Kommunikationsvorrichtung nach Anspruch 1, wobei das vorbestimmte Signal ein Signal zum Anfordern, durch die erste andere Vorrichtung, einer Verbindung zum Weiterleiten der Kommunikation mit der zweiten anderen Vorrichtung ist.

3. Kommunikationsvorrichtung nach Anspruch 2, wobei das Signal zum Anfordern der Verbindung ein Signal ist, welches gleichzeitig von der ersten anderen Vorrichtung an eine Mehrzahl von Vorrichtungen übertragen wird.

4. Kommunikationsvorrichtung nach einem der Ansprüche 1 bis 3, wobei die Kommunikationsvorrichtung derart steuert, dass der Übertragungszeitpunkt, in einem Fall, in welchem eine angeforderte Qualität, wenn die erste andere Vorrichtung mit der zweiten anderen Vorrichtung kommuniziert, mit einer Kommunikationsqualität zufriedenstellend ist, welche durch die Kommunikationsvorrichtung durch Kommunikation mit der zweiten anderen Vorrichtung erhältlich ist, früher ist als der Übertragungszeitpunkt in einem Fall, in welchem die angeforderte Qualität mit der Kommunikationsqualität nicht zufriedenstellbar ist.

5. Kommunikationsvorrichtung nach einem der Ansprüche 1 bis 4, wobei die Kommunikationsvorrichtung steuert, um den Übertragungszeitpunkt früher festzulegen, wenn eine höhere Wahrscheinlichkeit besteht, dass die erste andere Vorrichtung in der Lage ist, mit der zweiten anderen Vorrichtung zu kommunizieren, durch ein Weiterleiten der Kommunikationsvorrichtung.

6. Kommunikationsvorrichtung nach einem der Ansprüche 1 bis 5, wobei die Kommunikationsvorrichtung steuert, um den Übertragungszeitpunkt früher festzulegen, wenn eine größere Kommunikationskapazität für die Kommunikation für die ersten anderen Vorrichtung zur Verfügung steht, bei der Kommunikation zwischen der Kommunikationsvorrichtung und der zweiten anderen Vorrichtung.

7. Kommunikationsvorrichtung nach einem der Ansprüche 1 bis 6, wobei die Kommunikationsvorrichtung steuert, um den Übertragungszeitpunkt früher festzulegen, wenn die drahtlose Qualität bei der Kommunikation mit der zweiten anderen Vorrichtung besser ist.

8. Kommunikationsvorrichtung nach Anspruch 7, wobei die drahtlose Qualität wenigstens eines aus einer empfangenen Signalstärke, einem Signal-Rausch-Verhältnis und Signal-Interferenz- und Rausch-Verhältnis eines Signals umfasst, welches in der Kommunikationsvorrichtung in Bezug auf die Kommunikation mit der zweiten anderen Vorrichtung empfangen worden ist.

9. Kommunikationsvorrichtung nach einem der Ansprüche 1 bis 8, wobei die Kommunikationsvorrichtung steuert, um den Übertragungszeitpunkt früher festzulegen, wenn eine höhere Wahrscheinlichkeit besteht, dass die Kommunikationsvorrichtung in der Lage ist, mit der zweiten anderen Vorrichtung zu kommunizieren.

10. Kommunikationsvorrichtung nach Anspruch 9, wobei die Kommunikationsvorrichtung derart steuert, dass der Übertragungszeitpunkt, in einem Fall, in welchem die Kommunikationsvorrichtung mit der zweiten anderen Vorrichtung verbunden ist, früher ist als der Übertragungszeitpunkt, in einem Fall, in welchem die Kommunikationsvorrichtung nicht mit der zweiten anderen Vorrichtung verbunden ist.

11. Kommunikationsvorrichtung nach Anspruch 9, wobei die Kommunikationsvorrichtung bestimmt, dass eine höhere Wahrscheinlichkeit besteht, in der Lage zu sein, mit der zweiten anderen Vorrichtung zu kommunizieren, wenn eine höhere Wahrscheinlichkeit besteht, um sich zu einem Ort zu bewegen, an welchem die Kommunikation mit der zweiten anderen Vorrichtung möglich ist, an einer Bewegungsroute der Kommunikationsvorrichtung.

12. Kommunikationsvorrichtung nach einem der Ansprüche 1 bis 11, wobei die Kommunikationsvorrichtung steuert, um den Übertragungszeitpunkt früher festzulegen, wenn eine Zeit, während welcher die Kommunikationsvorrichtung eine Verbindung mit der zweiten anderen Vorrichtung aufrechterhalten kann, länger ist.

13. Kommunikationsvorrichtung nach einem der Ansprüche 1 bis 12, wobei die Kommunikationsvorrichtung ein Fahrzeug ist.

14. Kommunikationsvorrichtung nach einem der Ansprüche 1 bis 13, wobei die erste andere Vorrichtung ein Fahrzeug ist.

15. Kommunikationsvorrichtung nach einem der Ansprüche 1 bis 14, wobei die Kommunikation mit der zweiten anderen Vorrichtung über ein drahtloses LAN erfolgt.

16. Steuerungsverfahren, welches von einer Kommunikationsvorrichtung durchgeführt wird, welche drahtlos kommuniziert, wobei das Steuerungsverfahren umfasst:
Empfangen (S401), von einer ersten anderen Vorrichtung, eines vorbestimmten Signals, welches zu übertragen ist, bevor eine Verbindung mit der ersten anderen Vorrichtung hergestellt ist, und
Bestimmen (S403), auf ein Empfangen des vorbestimmten Signals hin, eines Übertragungszeitpunkts für eine Antwort auf das vorbestimmte Signal, auf Grundlage eines Kommunikationszustands, welcher zwischen der Kommunikationsvorrichtung und einer zweiten anderen Vorrichtung, welche ein Kommunikationspartner der ersten anderen Vorrichtung ist, ausführbar ist, und auf einer Bewegungsgeschwindigkeit der Kommunikationsvorrichtung; und
Übertragen (S404), zu der ersten anderen Vorrichtung, der Antwort auf das vorbestimmte Signal zu dem bestimmten Übertragungszeitpunkt,
wobei der Übertragungszeitpunkt umso früher bestimmt wird, je besser der Zustand ist, unter welchem die Kommunikationsvorrichtung in der Lage ist, eine Kommunikation zwischen der ersten anderen Vorrichtung und der zweiten anderen Vorrichtung weiterzuleiten,
wobei der Übertragungszeitpunkt bestimmt wird, um früher festgelegt zu sein, wenn die Bewegungsgeschwindigkeit der Kommunikationsvorrichtung niedriger ist.

17. Programm, welches, wenn es von einem Computer ausgeführt wird, welcher in einer Kommunikationsvorrichtung enthalten ist, welche drahtlos kommuniziert, die Kommunikationsvorrichtung veranlasst, zum:
Empfangen, von einer ersten anderen Vorrichtung, eines vorbestimmten Signals, welches zu übertragen ist, bevor eine Verbindung mit der ersten anderen Vorrichtung hergestellt ist,
Bestimmen, auf ein Empfangen des vorbestimmten Signals hin, eines Übertragungszeitpunkts für eine Antwort auf das vorbestimmte Signal, auf Grundlage eines Kommunikationszustands, welcher zwischen der Kommunikationsvorrichtung und einer zweiten anderen Vorrichtung, welche ein Kommunikationspartner der ersten anderen Vorrichtung ist, ausführbar ist, und auf einer Bewegungsgeschwindigkeit der Kommunikationsvorrichtung; und
Übertragen, zu der ersten anderen Vorrichtung, der Antwort auf das vorbestimmte Signal zu dem bestimmten Übertragungszeitpunkt,
wobei der Übertragungszeitpunkt umso früher bestimmt wird, je besser der Zustand ist, unter welchem die Kommunikationsvorrichtung in der Lage ist, eine Kommunikation zwischen der ersten anderen Vorrichtung und der zweiten anderen Vorrichtung weiterzuleiten,
wobei der Übertragungszeitpunkt bestimmt wird, um früher festgelegt zu sein, wenn die Bewegungsgeschwindigkeit der Kommunikationsvorrichtung niedriger ist.

## Revendications

1. Dispositif de communication configuré pour communiquer sans fil, le dispositif de communication étant configuré pour :
recevoir, en provenance d'un premier autre dispositif, un signal prédéterminé à transmettre avant l'établissement d'une connexion au premier autre dispositif;
déterminer, lors de la réception du signal prédéterminé, un moment de transmission d'une réponse au signal prédéterminé, sur la base d'une condition de communication qui est exécutable entre le dispositif de communication et un deuxième autre dispositif qui est un partenaire de communication du premier autre dispositif et d'une vitesse de déplacement du dispositif de communication ; et
transmettre, au premier autre dispositif, la réponse au signal prédéterminé au moment de transmission déterminé,
dans lequel le moment de transmission est déterminé comme étant plus tôt plus la condition dans laquelle le dispositif de communication est capable de relayer une communication entre le premier autre dispositif et le deuxième autre dispositif est favorable,
dans lequel le moment de transmission est déterminé comme étant plus tôt à mesure que la vitesse de déplacement du dispositif de communication est réduite.

2. Dispositif de communication selon la revendication 1, dans lequel le signal prédéterminé est un signal de demande, par le premier autre dispositif, d'une connexion de relais de la communication avec le deuxième autre dispositif.

3. Dispositif de communication selon la revendication 2, dans lequel le signal de demande de connexion est un signal transmis simultanément du premier autre dispositif à une pluralité de dispositifs.

4. Dispositif de communication selon l'une quelconque des revendications 1 à 3, dans lequel le dispositif de communication effectue une commande de sorte que le moment de transmission, dans un cas où une qualité demandée lorsque le premier autre dispositif communique avec le deuxième autre dispositif peut être satisfaite par une qualité de communication pouvant être obtenue par le dispositif de communication par communication avec le deuxième autre dispositif, soit antérieur au moment de transmission dans un cas où la qualité demandée ne peut pas être satisfaite par la qualité de communication.

5. Dispositif de communication selon l'une quelconque des revendications 1 à 4, dans lequel le dispositif de communication effectue une commande pour faire en sorte que le moment de transmission soit plus tôt à mesure qu'augmente une probabilité que le premier autre dispositif soit capable de communiquer avec le deuxième autre dispositif par relais du dispositif de communication.

6. Dispositif de communication selon l'une quelconque des revendications 1 à 5, dans lequel le dispositif de communication effectue une commande pour faire en sorte que le moment de transmission soit plus tôt à mesure qu'augmente une capacité de communication disponible pour la communication pour le premier autre dispositif dans la communication entre le dispositif de communication et le deuxième autre dispositif.

7. Dispositif de communication selon l'une quelconque des revendications 1 à 6, dans lequel le dispositif de communication effectue une commande pour faire en sorte que le moment de transmission soit plus tôt à mesure qu'une qualité sans fil dans la communication avec le deuxième autre dispositif est meilleure.

8. Dispositif de communication selon la revendication 7, dans lequel la qualité sans fil inclut au moins l'un parmi une intensité de signal reçu, un rapport signal/bruit et un rapport signal/brouillage et bruit d'un signal qui a été reçu dans le dispositif de communication concernant la communication avec le deuxième autre dispositif.

9. Dispositif de communication selon l'une quelconque des revendications 1 à 8, dans lequel le dispositif de communication effectue une commande pour faire en sorte que le moment de transmission soit plus tôt à mesure qu'augmente une probabilité que le dispositif de communication soit capable de communiquer avec le deuxième autre dispositif.

10. Dispositif de communication selon la revendication 9, dans lequel le dispositif de communication effectue une commande de sorte que le moment de transmission dans un cas où le dispositif de communication est connecté au deuxième autre dispositif soit antérieur au moment de transmission dans un cas où le dispositif de communication n'est pas connecté au deuxième autre dispositif.

11. Dispositif de communication selon la revendication 9, dans lequel le dispositif de communication détermine qu'il y a une probabilité plus élevée qu'il puisse communiquer avec le deuxième autre dispositif à mesure qu'augmente une probabilité qu'il se déplace vers un emplacement où la communication avec le deuxième autre dispositif est possible sur une trajectoire de déplacement du dispositif de communication.

12. Dispositif de communication selon l'une quelconque des revendications 1 à 11, dans lequel le dispositif de communication effectue une commande pour faire en sorte que le moment de transmission soit plus tôt à mesure qu'un temps pendant lequel le dispositif de communication est capable de maintenir une connexion au deuxième autre dispositif est plus long.

13. Dispositif de communication selon l'une quelconque des revendications 1 à 12, dans lequel le dispositif de communication est un véhicule.

14. Dispositif de communication selon l'une quelconque des revendications 1 à 13, dans lequel le premier autre dispositif est un véhicule.

15. Dispositif de communication selon l'une quelconque des revendications 1 à 14, dans lequel la communication avec le deuxième autre dispositif est réalisée par l'intermédiaire d'un réseau local sans fil.

16. Procédé de commande réalisé par un dispositif de communication qui communique sans fil, le procédé de commande comportant :
la réception (S401), en provenance d'un premier autre dispositif, d'un signal prédéterminé à transmettre avant l'établissement d'une connexion au premier autre dispositif; et
la détermination (S403), lors de la réception du signal prédéterminé, d'un moment de transmission d'une réponse au signal prédéterminé, sur la base d'une condition de communication qui est exécutable entre le dispositif de communication et un deuxième autre dispositif qui est un partenaire de communication du premier autre dispositif et d'une vitesse de déplacement du dispositif de communication ; et
la transmission (S404), au premier autre dispositif, de la réponse au signal prédéterminé au moment de transmission déterminé,
dans lequel le moment de transmission est déterminé comme étant plus tôt plus la condition dans laquelle le dispositif de communication est capable de relayer une communication entre le premier autre dispositif et le deuxième autre dispositif est favorable,
dans lequel le moment de transmission est déterminé comme étant plus tôt à mesure que la vitesse de déplacement du dispositif de communication est réduite.

17. Programme qui, lorsqu'il est exécuté par un ordinateur inclus dans un dispositif de communication qui communique sans fil, amène le dispositif de communication à :
recevoir, en provenance d'un premier autre dispositif, un signal prédéterminé à transmettre avant l'établissement d'une connexion au premier autre dispositif;
déterminer, lors de la réception du signal prédéterminé, un moment de transmission d'une réponse au signal prédéterminé, sur la base d'une condition de communication qui est exécutable entre le dispositif de communication et un deuxième autre dispositif qui est un partenaire de communication du premier autre dispositif et d'une vitesse de déplacement du dispositif de communication ; et
transmettre, au premier autre dispositif, la réponse au signal prédéterminé au moment de transmission déterminé,
dans lequel le moment de transmission est déterminé comme étant plus tôt plus la condition dans laquelle le dispositif de communication est capable de relayer une communication entre le premier autre dispositif et le deuxième autre dispositif est favorable,
dans lequel le moment de transmission est déterminé comme étant plus tôt à mesure que la vitesse de déplacement du dispositif de communication est réduite.
